# EUROPEAN PATENT APPLICATION

(11) **EP 2 085 630 A1**
(43) Date of publication of application: **05.08.2009**
(21) Application number: 07831635.3
(22) Date of filing: 12.11.2007
(51) Int. Cl.: F16C 41/00, F16C 33/58, F16C 33/78, G01P 3/487

(54) **SENSOR-EQUIPPED SEALING DEVICE, AND ROLLING BEARING DEVICE ADAPTED FOR USE IN VEHICLE AND USING THE SEALING DEVICE**

(30) Priority: 16.11.2006 JP 2006310307; 01.03.2007 JP 2007051250
(71) Applicant: JTEKT Corporation, Osaka-shi Osaka 542-8502 (JP)
(72) Inventor: KOYAGI, Katsura, Osaka-shi Osaka 542-8502 (JP); NUMATA, Tetsuaki, Osaka-shi Osaka 542-8502 (JP); MOTOHASHI, Nobutsuna, Osaka-shi Osaka 542-8502 (JP); MORIMURA, Naoki, Osaka-shi Osaka 542-8502 (JP)
(74) Representative: Hager, Thomas Johannes
(86) International application number: PCT/JP2007/071905
(87) International publication number: WO 2008/059788

(57) **Abstract**

To provide a rolling-bearing sensor attaching sealing device capable of ensuring a sufficient magnetic force with respect to a sensor and a vehicle rolling bearing using the same.
A vehicle rolling bearing 1 according to the invention includes a sensor attaching sealing device including an annular slinger 10 fixed to an inner shaft 2; a magnetic encoder 11 fixed to the slinger 10 so as to be integrally rotatable; and a sensor part 12 which includes a metal core 14 fixed to an outer ring 3 and provided with a seal member 15 slidably contacting with the slinger 10 and a magnetic sensor 13 detecting a relative rotation between the outer ring 3 and the inner shaft 2 by a variation of a magnetic pole using the magnetic encoder 11. The magnetic encoder 11 is formed by a plastic magnet which contains magnetic powders oriented with a magnetic field in a predetermined direction.

## Description

### Technical Field

The present invention relates to a rolling-bearing sensor attaching sealing device which is used for a rolling bearing for supporting a vehicle wheel of, for example, an automobile or the like and a vehicle rolling bearing which uses the same.

### Background Art

Patent Documents 1 to 3 disclose a hub unit (rolling bearing) provided with a sensor device, the hub unit including an inner ring (rotary bearing ring) to which a vehicle wheel is attached, an outer ring (fixed bearing ring) fixed to a vehicle body, and a rolling element which is disposed between the inner and outer rings.
As a rolling bearing which supports a vehicle wheel of an automobile or the like, there is known a rolling bearing which is equipped with a sensor device for detecting a rotation speed of a vehicle wheel in order to control an antilock brake system or the like. For example, as disclosed in Patent Document 1, the known sensor attaching rolling bearing includes a magnetic encoder which is provided on the side of an inner ring (rotary ring) and a magnetic sensor which is opposed to the magnetic encoder. The magnetic encoder is attached to the rotary ring so as to be integrally rotatable in such a manner that magnetic powders such as ferrite powders are mixed with an elastic member formed by rubber or the like and the elastic member is adhered by the cure adhesion to an axial outer surface of a rotary ring-side member (slinger) of a sealing device for sealing an annular opening between the inner and outer rings. In addition, plural N and S magnetic poles are alternately arranged in the periphery of the magnetic encoder in a circumferential direction. Meanwhile, the magnetic sensor includes a magnetic detection element, and a detection surface thereof is disposed on the outside of the rotary ring in an axial direction so as to be opposed to a target detection surface of the magnetic encoder. Patent Documents 2 and 3 disclose a rolling bearing in which an annular metal core is fixed to an outer ring so as to be attached with a seal member used to seal a gap between the outer and inner rings, and a resin member having a magnetic sensor embedded therein is integrally formed with the metal core by an insert molding process. In addition, the magnetic sensor is configured to detect a rotation speed of the rotary ring by detecting a variation of a magnetic field generated by the magnetic encoder in accordance with a rotation of the rotary ring.

Patent Document 1: JP-A-2006-220270
Patent Document 2: JP-A-2005-133772
Patent Document 3: JP-A-2004-264056

### Disclosure of the Invention

### Problem that the Invention is to Solve

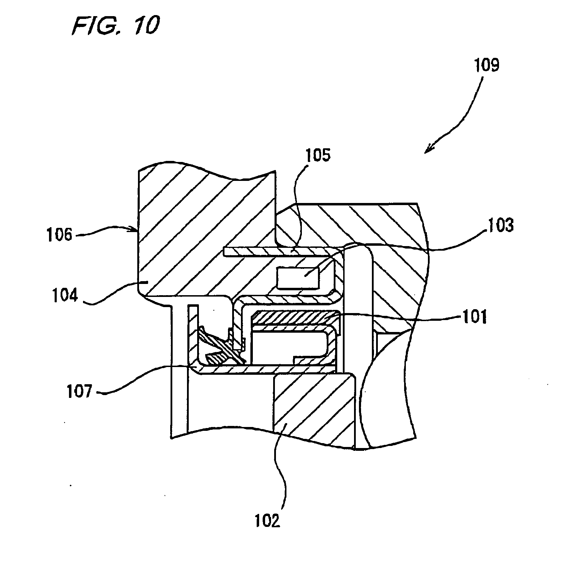

In the known rolling bearing, since the magnetic sensor is disposed on the outside of the rotary ring in an axial direction, an axial length dimension comparatively increases. Accordingly, it is difficult to apply the magnetic sensor to this kind of rolling bearing which is required to be compact in size.
Accordingly, for example, as shown in Fig. 10, by a sealing device 109 including a slinger 107 which has a magnetic encoder 101 provided on the outer peripheral side thereof and is fixed to the outer peripheral side of an inner ring 102; an annular body part 104 which has a magnetic sensor 103 embedded therein; and a sensor part 106 which is integrally formed with a metal core 105, a compact in size is attempted by restricting an axial dimension of the rolling bearing.

However, in the sealing device 109, since the magnetic sensor 103 is embedded in the body part 104 having the metal core 105 fixed thereto, for example, as shown in Fig. 10, the metal core 105 is interposed between the magnetic encoder 101 and the sensor part 106. Accordingly, a degree of freedom in layout deteriorates, and a gap between the magnetic encoder 101 and the sensor part 106 has to be increased. Likewise, when a gap therebetween increases, the magnetic sensor 103 may not ensure a sufficient magnetic force used for detecting a variation of a magnetic pole using the magnetic encoder 101.

Meanwhile, regarding the magnetic sensor, in the technology disclosed in Patent Document 2, the shape of the metal core is set so as not to be interposed between the magnetic sensor and the magnetic encoder. On the contrary, in the technology disclosed in Patent Document 3, a part of the metal core is interposed between the magnetic sensor and the magnetic encoder.

As in Patent Document 3, when the metal core exists between the magnetic sensor and the magnetic encoder, the magnetism of the metal core may have a bad influence on the detection precision of the magnetic sensor. Accordingly, in Patent Document 3, a nonmagnetic material is used to form the metal core.

The metal core having the above-described configuration is formed in a bent shape so as to allow the elastic seal to contact with the inner ring, and a plastic working process such as a pressing process is required in order to obtain such a shape. Meanwhile, as a nonmagnetic material which can be used as a material of the metal core, for example, SUS304 as austenitic stainless steel is known, but the SUS304 has magnetism upon being hardened by a pressing process. Accordingly, in order to use the material to form the metal core, the material has to be prevented from being magnetized so that the detection precision of the magnetic sensor does not deteriorate due to the magnetism generated during the process.

The present invention is contrived in consideration of the above-described circumstances, and an object of the invention is to provide a rolling-bearing sensor attaching sealing device which is capable of ensuring a sufficient magnetic force with respect to a sensor and a vehicle rolling bearing which uses the same.

### Means for Solving the Problem

In order to achieve the above-described object, according to an aspect of the invention, there is provided a rolling-bearing sensor attaching sealing device including: an annular slinger fixed to a rotary ring; a magnetic encoder fixed to the slinger so as to be integrally rotatable; and a sensor part including a metal core fixed to a fixed ring and provided with a seal member slidably contacting with the slinger and a magnetic sensor which detects a relative rotation between the fixed ring and the rotary ring by a variation of a magnetic pole using the magnetic encoder, wherein the magnetic encoder is formed by a plastic magnet which contains magnetic powders oriented with a magnetic field in a predetermined direction.

According to the sensor attaching sealing device having the above-described configuration, since the magnetic powders contained in the plastic magnet forming the magnetic encoder are oriented with the magnetic field, the magnetic flux density in an orientation direction of the magnetic field increases when the plastic magnet is magnetized, and hence a high magnetic force is applied. That is, in the case where plural magnetic poles are arranged in a circumferential direction of the plastic magnet so that the plastic magnet serves as the magnetic encoder, it is possible to obtain the magnetic encoder having a high magnetic force.
Accordingly, for example, even when the metal core is interposed between the magnetic encoder and the sensor part to thereby increase a gap therebetween like the known examples, it is possible to ensure a sufficient magnetic force with respect to the sensor part by a high magnetic force of the magnetic encoder.

In the sensor attaching sealing device having the above-described configuration, in the case where heat expansion coefficients between the magnetic encoder and the slinger are different, the magnetic encoder may be fixed to the slinger with a bumper member formed of an elastic material interposed therebetween.
With the above-described configuration, when the slinger and the magnetic encoder are deformed to be expanded and contracted due to a temperature variation, a difference between deformation amounts of the slinger and the magnetic encoder is allowed by the bumper member, thereby preventing the breakage of the magnetic encoder formed of a comparatively soft plastic magnet.

In the sensor attaching sealing device having the above-described configuration, the slinger may be provided with a stepped portion which regulates a relative movement of the magnetic encoder in an axial direction and a radial direction.
In this case, in the state where the magnetic encoder is not strongly fixed to the slinger and a high press-fitting allowance is ensured, it is possible to prevent the relative movement of the magnetic encoder with respect to the slinger by the stepped portion provided in the slinger, and to reliably fix the magnetic encoder to the slinger so as to be integrally rotatable. Accordingly, even in the case where the bumper member is interposed between the magnetic encoder and the slinger, it is possible to reliably fix the magnetic encoder to the slinger so as to be integrally rotatable.

In the sensor attaching sealing device having the above-described configuration, the slinger may be provided with an annular support member fixed to a peripheral surface thereof so as to support the magnetic encoder, and the support member may be provided with the stepped portion.
In this case, since the stepped surface is formed in the support member separated from the slinger fixed to the rotary ring, it is possible to easily form the stepped portion.

According to another aspect of the invention, there is provided a vehicle rolling bearing including: a fixed ring fixed to a vehicle body; and a sensor attaching sealing device including a rotary ring to which a vehicle wheel is fixed, a plurality of rolling elements which is interposed between the fixed ring and the rotary ring, and a sensor which shields a gap between the fixed ring and the rotary ring and detects a relative rotation between the fixed ring and the rotary ring, wherein the sensor attaching sealing device is the above-described sensor attaching sealing device.
According to the vehicle rolling bearing having the above-described configuration, since it is possible to apply a high magnetic force to the magnetic encoder, it is possible to ensure a sufficient magnetic force with respect to the sensor part by the high magnetic force of the magnetic encoder even when a gap between the magnetic encoder and the sensor part increases.

According to still another aspect of the invention, there is provided a rolling-bearing sensor attaching sealing device including: an annular slinger fixed to a rotary ring; a magnetic encoder fixed to the slinger so as to be integrally rotatable; and a sensor part including a metal core fixed to a fixed ring and provided with a seal member slidably contacting with the slinger and a magnetic sensor which detects a relative rotation between the fixed ring and the rotary ring by a variation of a magnetic pole using the magnetic encoder, wherein the metal core is formed by a plastic working process and at least a part thereof is interposed between the magnetic sensor and the magnetic encoder, and wherein the metal core is formed of a nonmagnetic material which is resistant against magnetization by the plastic working process.

According to still another aspect of the invention, there is provided a vehicle rolling bearing including: a fixed ring fixed to a vehicle body; and a sensor attaching sealing device including a rotary ring to which a vehicle wheel is fixed, a plurality of rolling elements which is interposed between the fixed ring and the rotary ring, and a sensor which shields a gap between the fixed ring and the rotary ring and detects a relative rotation between the fixed ring and the rotary ring, wherein the sensor attaching sealing device is the above-described sensor attaching sealing device.

With the above-described configuration, even when the metal core is formed by, for example, a pressing process or the like, the metal core is not magnetized due to the pressing process and does not have a bad influence on the detection precision of the magnetic sensor.

As the nonmagnetic material forming the metal core, for example, SUS304L or SUS305 may be used.

In the vehicle rolling bearing having the above-described configuration, the metal core may include an outer-peripheral-side cylindrical portion which is fitted and fixed to the fixed ring; a first flange portion which extends inward in a radial direction from an axial inner end of the outer-peripheral-side cylindrical portion; an inner-peripheral-side cylindrical portion which extends outward in an axial direction from a radial inner end of the first flange portion so as to pass through a gap between the magnetic sensor and the pulser; and a second flange portion which extends toward a rotary bearing ring from an axial outer end portion of the inner-peripheral-side cylindrical portion, and the second flange portion may be provided with a seal member which seals a gap between the second flange portion and the rotary ring.

In this case, since the axial outer part of the magnetic encoder is covered by the second flange portion and the seal member, it is possible to protect the magnetic encoder so that water or the like cannot enter the bearing.

With the above-described configuration, by the metal core interposed between the magnetic sensor and the magnetic encoder, it is possible to ensure a sufficient magnetic force of the magnetic encoder with respect to the magnetic sensor without having a bad influence on the detection precision of the magnetic sensor.

### Advantage of the Invention

In the rolling-bearing sensor attaching sealing device and the vehicle rolling bearing using the same according to the invention, since it is possible to apply a high magnetic force to the magnetic encoder, it is possible to ensure a sufficient magnetic force with respect to the sensor part even when a gap between the magnetic encoder and the sensor part increases.

### Brief Description of the Drawings

[Fig. 1] Fig. 1 is a sectional view showing a configuration of a vehicle rolling bearing provided with a sensor attaching sealing device according to a first embodiment of the invention.
[Fig. 2] Fig. 2 is a partially enlarged sectional view showing a main part of the vehicle rolling bearing in Fig. 1.
[Fig. 3] Fig. 3(a) is a partially external view showing a part of a support member and Fig. 3(b) is a sectional view showing a main part of the vehicle rolling bearing when taken along the line A-A in Fig. 2.
[Fig. 4] Fig. 4 is a schematic view showing the shape of magnetic powders oriented with a magnetic field and contained in a plastic magnet.
[Fig. 5] Fig. 5(a) is a partially sectional view showing a main part of the sensor attaching sealing device according to a second embodiment of the invention and Fig. 5(b) is a partially external view showing a part of the support member.
[Fig. 6] Fig. 6 is a partially sectional view showing a modified example of the sensor attaching sealing device according to the second embodiment.
[Fig. 7] Fig. 7 is a sectional view showing the rolling bearing according to a third embodiment of the invention.
[Fig. 8] Fig. 8 is a front view showing the rolling bearing according to the third embodiment.
[Fig. 9] Fig. 9 is a sectional view showing an enlarged main part of the rolling bearing according to the third embodiment of the invention.
[Fig. 10] Fig. 10 is a partially sectional view showing a known sensor attaching sealing device.

### Best Mode for Carrying Out the Invention

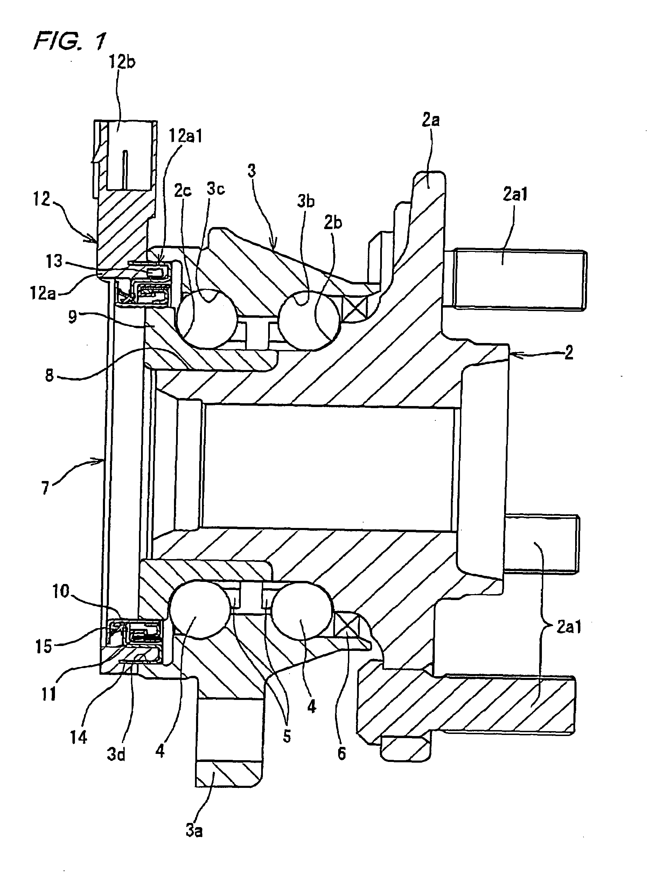

Next, preferred embodiments of the invention will be described with reference to the accompanying drawings. Fig. 1 is a sectional view showing a configuration of a vehicle rolling bearing provided with a sensor attaching sealing device according to a first embodiment of the invention. A vehicle rolling bearing 1 is configured to support a vehicle wheel of a vehicle such as an automobile so as to be rotatable relative to a suspension device.

In Fig. 1, the vehicle rolling bearing I forms plural rows of angular ball bearings, and includes an inner shaft 2 which has a flange portion 2a formed in one end thereof so as to be attached with a vehicle wheel (not shown); an outer ring 3 which is coaxially disposed on the outer peripheral side of the inner shaft 2; plural balls 4 which serve as rolling elements interposed between the inner shaft 2 and the outer ring 3; and a holder 5 which holds the balls 4 in a circumferential direction so as to have a uniform interval therebetween. In addition, the vehicle rolling bearing 1 includes a seal 6 which seals an annular gap formed on the side of one axial end between the outer ring 3 and the inner shaft 2 and a sensor attaching sealing device 7 which seals an annular gap formed on the side of the other axial end.

The outer ring 3 is a fixed ring fixed to the vehicle and has an attachment flange 3a which is formed on the outer peripheral surface thereof so as to be attached to the vehicle suspension device. In addition, the outer ring has first and second outer ring guideways 3b and 3c which are formed on the inner peripheral surface thereof so as to allow the balls 4 to roll therethrough.

The inner shaft 2 is a vehicle wheel to which the above-described vehicle wheel is attached and forms a rotary ring of the vehicle rolling bearing 1. Plural hub bolts 2a1 are fixed to the flange portion 2a, formed in one end of the inner shaft 2, so as to fix the vehicle wheel to the flange portion 2a. In addition, the outer peripheral surface of the inner shaft 2 is provided with a first inner ring guideway 2b which is opposed to the first outer ring guideway 3b. The other end of the inner shaft 2 is provided with a small diameter portion 8 which is smaller than the outer peripheral surface of the inner shaft 2. An annular inner ring member 9, having the second inner ring guideway 2c formed on the outer peripheral surface thereof so as to be opposed to the second outer ring guideway 3c, is fitted to the outside of the small diameter portion 8.

The above-described plural balls 4 are respectively disposed at a position between the first inner ring guideway 2b and the first outer ring guideway 3b and a position between the second inner ring guideway 2c and the second outer ring guideway 3c so as to be capable of rolling therethrough.
With the above-described configuration, the vehicle rolling bearing 1 supports the inner shaft 2 so as to be rotatable relative to the outer ring 3, and rotatably supports the vehicle fixed to the inner shaft 2.

The sensor attaching sealing device 7, sealing the annular gap between the inner shaft 2 and the outer ring 3, includes an annular slinger 10 fixed to the outside of the outer peripheral surface of an inner ring member 9; an annular magnetic encoder 11 fixed to the slinger 10 so as to be integrally rotatable; and a sensor part 12 fixed to the inside of the inner peripheral surface 3d on the side of the other end of the outer ring 3.

The sensor part 12 is formed of a resin or the like so as to have an annular shape, and includes an annular body portion 12a which has a magnetic sensor 13 embedded therein; an annular metal core 14 fixed to the body portion 12a; and a connector 12b which protrudes outward in a radial direction from the body portion 12a. The connector 12b is connected to a harness of a vehicle control device equipped with the vehicle rolling bearing 1, and is configured to output a detection signal of the magnetic sensor 13 to the control device.
In addition, the body portion 12a is provided with a protrusion portion 12a1 which protrudes toward one axial end along the peripheral edge of the inner diameter end thereof, and is fixed with the metal core 14 along the end surface and the inner and outer peripheral surfaces of the protrusion portion 12a1.

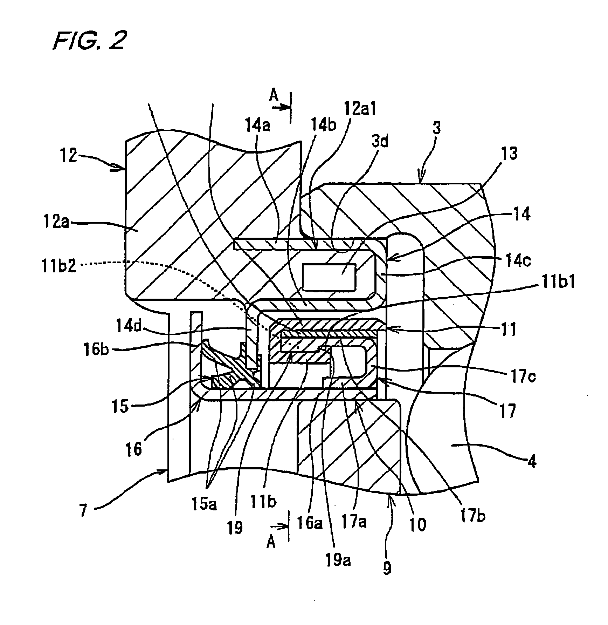

Fig. 2 is a partially enlarged sectional view showing a main part of the vehicle rolling bearing in Fig. 1. In the drawing, the metal core 14 is formed by performing a pressing process on a stainless steel plate or a cold rolled steel plate such as SPCC, SPCD, or SPCE, and is formed to have a substantially U-shaped section provided with an outer cylindrical portion 14a which is formed along the outer peripheral surface of the protrusion portion 12a1; an inner cylindrical portion 14b which is formed along the inner peripheral surface of the protrusion portion 12a1; and an annular portion 14c which is formed along the end surface of the protrusion portion 12a1 so as to connect one axial ends of both cylindrical portions 14a and 14b to each other. As a material of the metal core 14, it is desirable to particularly select a material, which is resistant against magnetization by the pressing process, among the above-described materials. In addition, the other end of the inner cylinder portion 14b is provided with an edge 14d which extends inward in a radial direction. A seal member 15 is fixed to the inner peripheral end of the edge 14d by the cure adhesion so as to seal a gap between the slinger 10 and the sensor part 12.
The seal member 15 is an annular member which is formed of an elastic material such as rubber, and includes plural seal lips 15a which come into slidable contact with the outer peripheral surface of the slinger 10 fixed to the inner ring member 9.

In addition, the protrusion portion 12a1 of the sensor part 12 has the above-described magnetic sensor 13 embedded therein. The magnetic sensor 13 is configured to detect a variation of the magnetic pole caused by a magnetic encoder 11 rotating together with the inner shaft 2 and to output the detection signal. The magnetic sensor 13 is disposed inside the protrusion portion 12a1 so as to be positioned between both cylindrical portions 14a and 14b.

The slinger 10 includes a body portion 16 which is formed to have an L-shaped section provided with a cylindrical portion 16a which is fitted to the outside of the inner ring member 9 and an annular portion 16b which extends outward in a radial direction from the other axial end of the cylindrical portion 16a. The annular portion 16b of the body portion 16 is formed so as to be opposed to the edge 14d of the metal core 14. The plural seal lips 15a of the seal member 15 fixed to the above-described edge 14d are formed so that the front ends thereof come into slidable contact with the side surface of the annular portion 16b and the outer peripheral surface of the cylindrical portion 16, thereby sealing a gap between the slinger 10 and the metal core 14 by the seal member 15.
In addition, the slinger 10 is fixed to the outside of the outer peripheral surface of the cylindrical portion 16a and further includes an annular support member 17 which is formed on the outer peripheral side thereof so as to support the magnetic encoder 11. The support member 17 is fixed to the cylindrical portion 16a so as to be disposed on the inner peripheral side of the inner cylindrical portion 14b of the metal core 14, and is formed to have a U-shaped section provided with an inner cylindrical portion 17a which is fitted to the outside of the outer peripheral surface of the cylindrical portion 16a; an outer cylindrical portion 17b which is disposed on the outer peripheral side of the inner cylindrical portion 17a; and an annular portion 17c which connects one axial ends of both cylindrical portions 17a and 17b to each other.

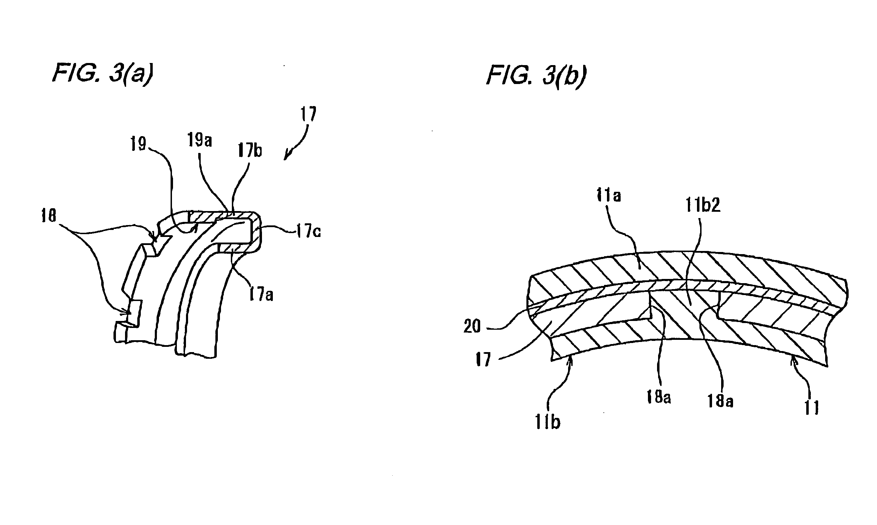

Fig. 3(a) is a partially external view showing a part of the support member 17. As shown in the drawing, the other axial end of the outer cylindrical portion 17b of the support member 17 is provided with notch portions 18 which are formed in a circumferential direction so as to have a predetermined interval therebetween. In addition, the other axial end of the outer cylindrical portion 17b is provided with a protrusion portion 19 which protrudes inward in a radial direction more than the inner peripheral surface of the outer cylindrical portion 17b.
In addition, the body portion 16 and the support member 17 of the slinger 10 is formed by performing a pressing process on a stainless steel plate or a cold rolled steel plate such as SPCC, SPCD, or SPCE in the same manner as the metal core 14.

Returning to Fig. 2, the magnetic encoder 11, supported by the support member 17 so as to be integrally rotatable, is formed by a plastic magnet to have an annular shape and includes a cylindrical portion 11a which is disposed on the outer peripheral surface of the outer cylindrical portion 17b of the support member 17 and a sneak portion 11b which extends from the end of the cylindrical portion 11a so as to cover the end of the outer cylindrical portion 17b and the protrusion portion 19 on the inner peripheral surface thereof.
The cylindrical portion 11a of the magnetic encoder 11 is opposed to the inner cylindrical portion 14b of the metal core 14 so as to have a slight gap therebetween, and is disposed on the inside of the magnetic sensor 13 embedded in the protrusion portion 12a1 of the body 12a of the sensor part 12 with a part of the body 12a, the inner cylindrical portion 14b, and the gap interposed therebetween. In addition, the cylindrical portion 11a is magnetized so that N and S poles are arranged at a predetermined position in a circumferential direction. For this reason, the magnetic encoder 11 rotating together with the inner shaft 2 is capable of varying the magnetic pole with respect to the magnetic sensor 13 in accordance with the rotation of the inner shaft 2. The magnetic sensor 13 detects the magnetic pole varying in accordance with the rotation of the inner shaft 2, and outputs the detection signal to the control device of the vehicle. The control device recognizes the rotation speed of the inner ring 2 on the basis of the detection signal of the magnetic sensor 13, and reflects the rotation speed for the control of an antilock brake system or the like of the vehicle.

In addition, the cylindrical portion 11a of the magnetic encoder 11 and the outer cylindrical portion 17b of the support member 17 are disposed with a bumper member 20 formed of an elastic material such as rubber interposed therebetween. When the support member 17 disposed on the side of the slinger 10 formed of a steel plate and the magnetic encoder 11 formed by a plastic magnet have largely different heat expansion coefficients and are deformed to be expanded or contracted with the temperature variation, the deformation amounts of the support member 17 and the magnetic encoder 11 are different from each other. For this reason, when the bumper member 20 is interposed between the magnetic encoder 11 and the support member 17, it is possible to allow the difference between both deformation amounts and to prevent the breakage of the magnetic encoder 11 formed by a comparatively soft plastic magnet.
In addition, even when the support member 17 and the magnetic encoder 11 are deformed in a direction moving away from each other due to the difference between the heat expansion coefficients thereof, it is possible to prevent a gap from being formed between both magnetic encoder 11 and the support member 17 by the bumper member 20 interposed therebetween and to prevent a foreign material from entering therebetween. As a result, it is possible to prevent the deterioration or the like of the magnetic encoder 11.

The axial front end of the sneak portion 11b is provided with a protrusion 11b1 which protrudes outward in a radial direction so as to come into contact with a side portion 19a of the protrusion portion 19 of the outer cylindrical portion 17b. The sneak portion 11b comes into contact with the end of the outer cylindrical portion 17b. With the above-described configuration, when the sneak portion 11b comes into contact with the side portion 19a of the protrusion portion 19 and the end of the outer cylindrical portion 17b, it is possible to prevent the relative movement of the magnetic encoder 11 and the support member 17 in an axial direction.

The inner surface of the sneak portion 11b facing the support member 17 is provided with a fitting portion 11b2 which is fitted to the notch portion 18 of the outer cylindrical portion 17b.
Fig. 3(b) is a sectional view showing a main part of the vehicle rolling bearing when taken along the line A-A in Fig. 2. The fitting portion 11b2 protrudes in a radial direction so as to correspond to the notch portion 18 and comes into contact with a wall portion 18a of the notch portion 18. With the above-described configuration, when the fitting portion 11b2 comes into contact with the wall portion 18a, it is possible to prevent the relative movement of the magnetic encoder 11 and the support member 17 in a radial direction.
The side portion 19a of the protrusion portion 19 and the wall portion 18a of the notch portion 18 formed in the outer cylindrical portion 17b respectively form stepped portions which regulate the relative movement of the magnetic encoder 11 with respect to the slinger 10 in an axial direction and a radial direction. By the side portion 19a and the wall portion 18a, it is possible to prevent the relative movement of the magnetic encoder 11 in the state where the magnetic encoder 11 is not strongly fixed to the outer cylindrical portion 17b and the high press-fitting allowance is ensured therebetween. Accordingly, like this embodiment, when the bumper member 20 formed of an elastic material is interposed between the magnetic encoder 11 and the support member 17, particularly, the magnetic encoder 11 can be effectively fixed.

In the case of the slinger 10 without the support member 17, the body portion 16 of the slinger 10 is required to be provided with a portion corresponding to the stepped portions used to regulate the relative movement in an axial direction and a radial direction. However, in this embodiment, since the support member 17 formed as a member separated from the body portion 16 is provided with the side portion 19a of the protrusion portion 19 and the wall portion 18a of the notch portion 18, it is possible to easily form the side portion 19a and the wall portion 18a which form the stepped portions.

The plastic magnet used to form the magnetic encoder 11 contains a large amount of magnetic powders and serves as a magnet by the magnetic powders. In detail, the ferrite powders as the magnetic powers are mixed with a resin material such as a polyphenylene sulfide (PPS) resin or a polyamide (PA) resin and are formed in a predetermined shape.
The magnetic powders contained in the plastic magnet forming the magnetic encoder 11 according to this embodiment are oriented with a magnetic field in a predetermined direction.

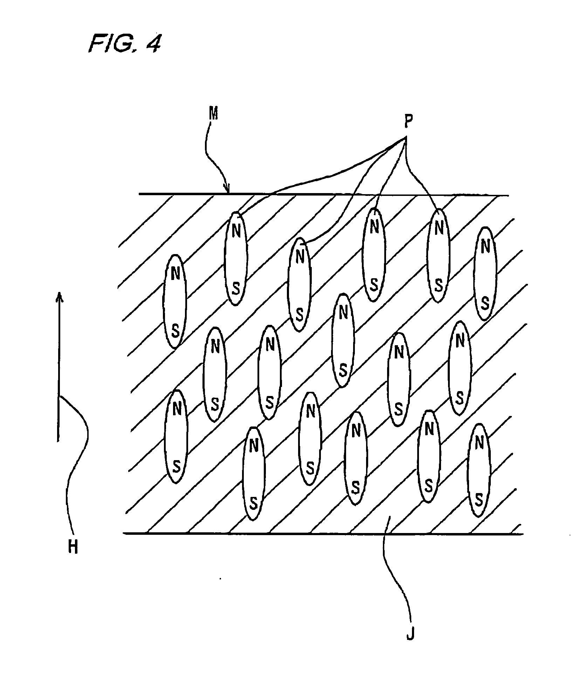

Hereinafter, the magnetic powers oriented with the magnetic field and the plastic magnet containing the magnetic powders will be described. Fig. 4 is a schematic view showing the shape of magnetic powders oriented with the magnetic field and contained in the plastic magnet. In the drawing, a plastic magnet M is formed by a resin portion J which forms the shape of the plastic magnet M and a large amount of magnetic powders P, where the plastic magnet M contains a large amount of magnetic powders P.
As the large amount of magnetic powders P, ferrite powders having an anisotropic magnetism (or an anisotropic shape) or the like is used. In Fig. 4, the anisotropy is schematically shown as an oval shape, where one end is shown as an N pole and the other end is shown as an S pole. When the magnetic powders P are mixed with the resin material so as to be formed in a predetermined shape, the magnetic powders P are oriented in a predetermined direction, for example, a direction of the arrow H in Fig. 4 by the applied magnetic field. With the above-described configuration, when the magnetic field is applied upon forming the magnetic powders in a predetermined shape, as shown in Fig. 4, the magnetic powders P having the anisotropic magnetism are oriented in a direction of the magnetic field and are formed as the plastic magnet M oriented with the magnetic field. As a result, it is possible to obtain the plastic magnet M containing the magnetic powders P which are oriented with the magnetic field in a predetermined direction.
In addition, as a material of the resin portion J, it is desirable to adopt polyamide 6 and polyamide 12. Since the resins have a comparatively low viscosity upon forming the magnetic powders in a predetermined shape and can restrict a resistance to be low upon aligning the magnetic powders P, it is possible to effectively align the magnetic powders P.

Since the plastic magnet contains the magnetic powders P which are oriented in a predetermined direction, when the magnetic powders are magnetized thereafter, it is possible to increase the magnetic flux density in a predetermined direction compared with the case where the magnetic powders P are not oriented with the magnetic field, and thus to obtain the high magnetic force in a predetermined direction.
In Fig. 4, for example, assuming that the upper surface of the plastic magnet M in the drawing is the outer peripheral surface of the cylindrical portion 17b, the lower surface is the inner peripheral surface, and the orientation direction of the magnetic field is an outer radial direction, since the magnetic powders P contained in the plastic magnet are oriented outward in a radial direction, it is possible to increase the magnetic flux density of the magnetized plastic magnet M in an outer radial direction. Accordingly, it is possible to obtain the high magnetic force in an outer radial direction.

According to the sensor attaching sealing device 7 and the vehicle rolling bearing 1 having the above-described configuration, since the magnetic powders contained in the plastic magnet forming the magnetic encoder 11 are oriented with the magnetic field, when the plastic magnet is magnetized, it is possible to increase the magnetic flux density in the direction oriented with the magnetic field, and thus obtain the high magnetic force. That is, in the case where plural magnetic poles are arranged in a circumferential direction of the plastic magnet so that the plastic magnet serves as the magnetic encoder 11, it is possible to obtain the magnetic encoder having the high magnetic force.
Accordingly, even when a gap between the magnetic encoder 11 and the magnetic sensor 13 increases due to the metal core 14 or the like interposed therebetween, it is possible to ensure the sufficient magnetic force with respect to the magnetic sensor 13 by the high magnetic force of the magnetic encoder 11.

In addition, for example, in the case where the vehicle rolling bearing 1 is required to be further decreased in size, of course, the decrease in size of the sealing device 7 is required. Accordingly, the decrease in size of the magnetic encoder 11 is required. When the magnetic encoder 11 is decreased in size, since the actual area where the magnetic force is generated by the magnetic encoder 11 decreases, a problem arises in that the required magnetic force is not ensured from the sensor due to the decreased magnetic force.
Even in this case, in this embodiment, since it is possible to ensure the sufficient magnetic force by applying the high magnetic force to the magnetic encoder 11, it is possible to further decrease the sizes of the vehicle rolling bearing 1 and the sensor attaching sealing device 7.

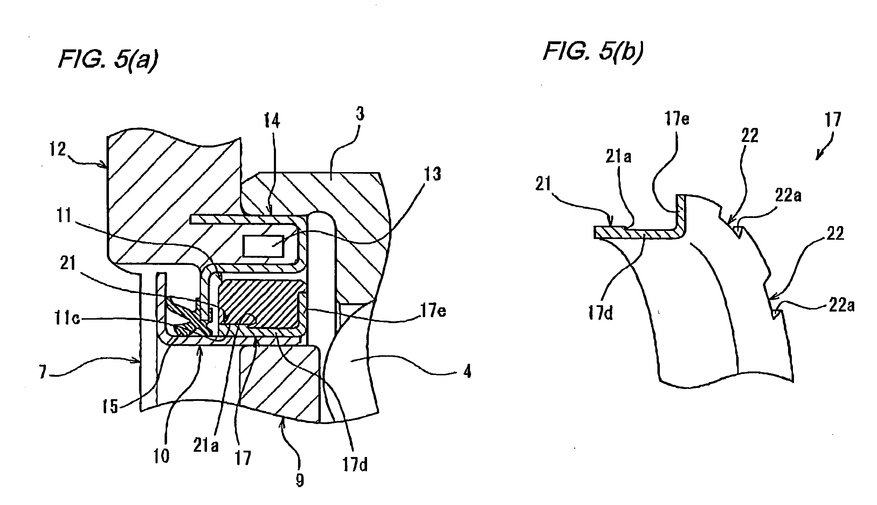

Fig. 5(a) is a partially sectional view showing a main part of the sensor attaching sealing device according to a second embodiment of the invention and Fig. 5(b) is a partially external view showing a part of the support member. This embodiment is mainly different from the first embodiment in that the magnetic encoder 11 is formed to have a substantially rectangular-annular-shaped section and the support member 17 is formed to have an L-shaped section along the outer surface of the magnetic encoder 11. The other configurations are the same as those of the first embodiment, and thus the description thereof will be omitted.

The support member 17 in the slinger 10 of the sensor attaching sealing device 7 according to this embodiment is formed to have a substantially L-shaped section provided with a cylindrical portion 17d which is fitted to the outside of the body portion 16 and an annular portion 17e which extends outward in a radial direction from one axial end of the cylindrical portion 17d. The magnetic encoder 11 is fitted to the outside of the outer peripheral surface of the cylindrical portion 17d and is disposed along the side surface of the annular portion 17e. For this reason, compared with the first embodiment in which the support member 17 has the U-shaped section, the thickness dimension of the magnetic encoder 11 is set to be large.

The front end of the cylindrical portion 17d is provided with a protrusion portion 21 which protrudes outward in a radial direction more than the outer peripheral surface of the cylindrical portion 17d. The inner peripheral surface of the magnetic encoder 11 is provided with a stepped portion 11c corresponding to the protrusion portion 21, and the magnetic encoder 11 is fitted and held between a side portion 21 a of the protrusion portion 21 and the annular portion 17e. That is, by the side portion 21a, serving as the stepped portion, of the protrusion portion 21, it is possible to prevent the relative movement of the magnetic encoder 11 and the support member 17 in an axial direction.
In addition, the outer peripheral end of the annular portion 17e is provided with notch portions 22 which are formed inward in a radial direction so as to have a predetermined interval in a circumferential direction. On the contrary, in the same manner as the first embodiment, the end surface on the side of one axial end of the magnetic encoder 11 is provided with the fitting portion 11b2 which is fitted to the notch portion 22. When the fitting portion 11b2 comes into contact with a wall portion 22a, serving as the stepped portion, of the notch portion 22, it is possible to prevent the relative movement of the magnetic encoder 11 and the support member 17 in a radial direction.

According to the sensor attaching sealing device 7 having the above-described configuration, since the support member 17 is formed to have the L-shaped section and the thickness dimension of the magnetic encoder 11 is set to be large, it is possible to increase the rigidity of the magnetic encoder 11. For this reason, it is not necessary to interpose the bumper member, shown in the first embodiment and preventing the breakage of the magnetic encoder 11, between the magnetic encoder 11 and the support member 17. Accordingly, it is possible to simplify the structure and to reduce the cost.
In this embodiment, since the bumper member is not required as described above, it is possible to directly form the plastic magnet forming the magnetic encoder 11 in the support member 17 by an injection molding process. In this case, since it is possible to further reliably and integrally fix the magnetic encoder 11 to the slinger 10 (support member 17) and to omit a process of fitting the magnetic encoder 11 to the support member 17, it is possible to simplify a process of assembling the sealing device 7.
In addition, although the cost or the assembling processes increase, it is needless to say that the bumper member can be interposed between the support member 17 and the magnetic encoder 11 in the same manner as the first embodiment.

Further, the present invention is not limited to the above-described embodiment. In the above-described embodiment, there is exemplified a case where the magnetic powders contained in the plastic magnet are oriented with the magnetic field so as to have the anisotropic magnetism. However, for example, the magnetic powders may be oriented with the magnetic field on the basis of the magnetic powders having the anisotropic shape.
In the above-described embodiments, there is exemplified a case where the ferrite powders are used as the magnetic powders used for the plastic magnet forming the magnetic encoder. However, rare-earth-based magnetic powders such as neodymium or samarium may be used. In this case, it is possible to obtain the high magnetic force by the magnetic encoder.
The metal core may be formed of a nonmagnetic material such as SUS304L and SUS305 as shown in the embodiment described below.

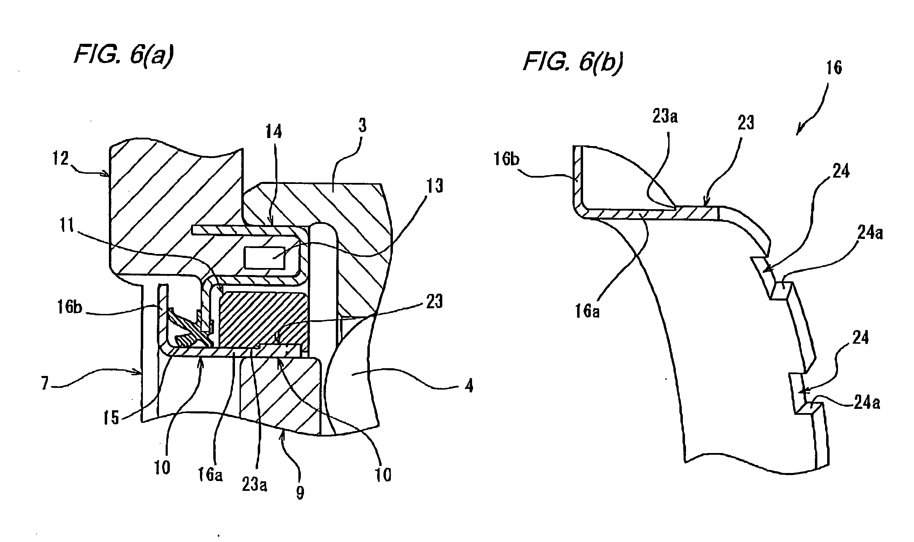

In the second embodiment, the support member 17 is interposed between the body portion 16 of the slinger 10 and the magnetic encoder 11. However, for example, as shown in Figs. 6(a) and 6(b), the support member may be directly fitted to the outside of the cylindrical portion 16a of the body portion 16 of the slinger 10. In this case, when the cylindrical portion 16a of the body portion 16 is provided with a protrusion portion 23 and a notch portion 24, a stepped portion for regulating the relative movement of the magnetic encoder 11 may be formed by a side portion 23a of the protrusion portion 23 and a wall portion 24a of the notch portion 24. Of course, it is possible to directly form the plastic magnet in the body portion 16 by an injection molding process.
According to the sensor attaching sealing device shown in Fig. 6, since the support member 17 according to the above-described embodiments is not provided, it is possible to further simplify the structure and to reduce the cost.

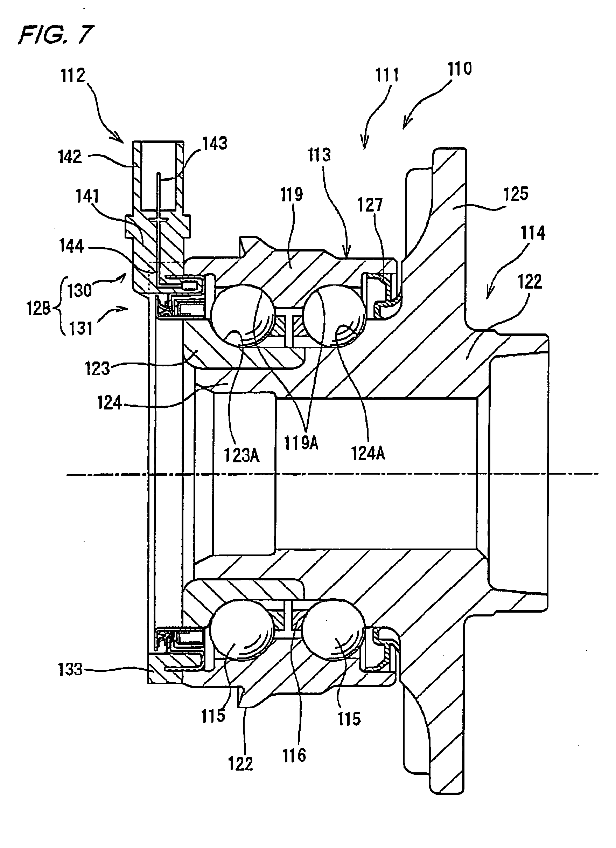

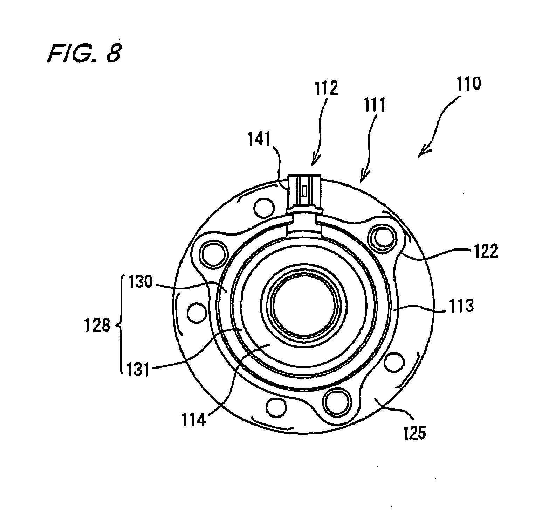

Fig. 7 is a sectional view showing the rolling bearing 110 according to a third embodiment of the invention. Fig. 8 is a front view showing the rolling bearing 110. The rolling bearing 110 includes a hub unit 111 and a sensor device 112. The hub unit 111 includes an outer ring (fixed ring) 113 fixed to a vehicle body; an inner ring (rotary ring) 114 which is attached with a vehicle wheel; plural balls (rolling elements) 115 which are disposed between the outer ring 113 and the inner ring 114; and a holder 116 which holds the balls 115.

In addition, in Fig. 7, the left side of the hub unit 111 indicates a vehicle body side (inner side) and the right side thereof indicates a vehicle wheel side (outer side). A direction from the axial center of the hub unit 111 toward the inner and outer sides indicates an outer axial direction. A direction from the inner and outer sides toward the axial center of the hub unit indicates an inner axial direction.

The outer ring 113 includes a cylindrical portion 119 which has two rows of guideway surfaces 119A formed on the inner peripheral surface thereof and a flange portion 120 which protrudes outward in a radial direction from the outer peripheral surface of the cylindrical portion 119. The outer ring 113 is attached to the vehicle body at the flange portion 120 by a bolt.
The inner ring 114 includes a hub wheel 122 and a cylindrical wheel 123 which is fitted to the inner outer peripheral surface of the hub wheel 122. The hub wheel 122 includes a cylindrical portion 124 and a flange portion 125 which protrudes outward in a radial direction from the outer peripheral surface of the cylindrical portion 124. The vehicle wheels are attached to the flange portion 125 by a bolt. The outer peripheral surface of the cylindrical portion 124 and the outer peripheral surface of the cylindrical wheel 123 are respectively provided with one row of guideway surface 124A and one row of guideway surface 123A. Two rows of plural balls 115 are disposed in an axial direction between the guideway surfaces 119A formed in the outer ring 113 and the guideway surfaces 124A and 123A.

An elastic seal 127 is provided between the inner peripheral surface of the outer end of the outer ring 113 and the outer peripheral surface of the cylindrical portion 124 of the hub wheel 122 so as to prevent soil from entering the bearing. In addition, in the same manner, the inner ends of the outer ring 113 and the inner ring 114 are provided with a seal device 128 which prevents the entry of soil or the like.

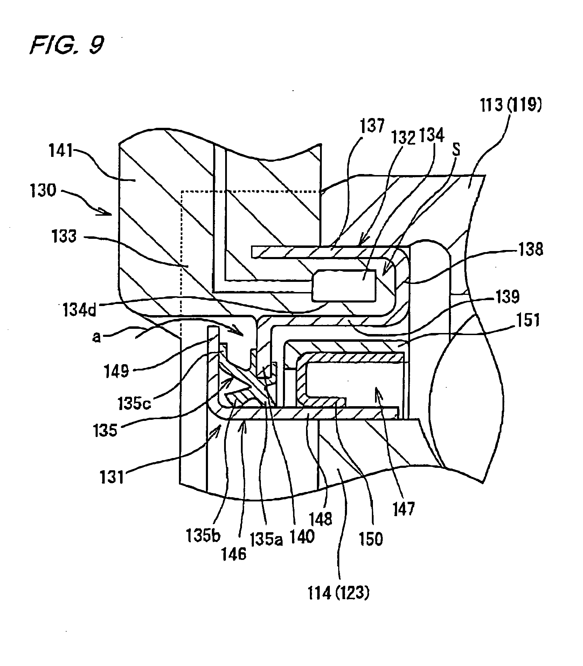

Fig. 9 is a sectional view showing an enlarged main part of the rolling bearing according to the invention. The seal device 128 constituting the sensor attaching sealing device according to this embodiment includes a fixed seal member 130 fixed to the outer ring 113 and a rotary seal memb er 131 fixed to the inner ring 114.
The fixed seal member 130 includes a metal core 132; a resin member 133 which is integrally formed with the metal core 132 by an insert molding; a magnetic sensor 134 which is disposed inside the resin member 133; and an elastic seal (seal member) 135 which is adhered to the metal core 132.

The metal core 132 is formed in an annular shape, and includes an outer-peripheral-side cylindrical portion 137 which is formed in the radial outer end thereof so as to extend in an axial direction; an outer flange portion (first flange portion) 138 which extends inward in a radial direction from the outer end of the cylindrical portion 137; an inner-peripheral-side cylindrical portion 139 which extends toward the inner side in an axial direction from the radial inner end of the outer flange portion 138; and an inner flange portion (second flange portion) 140 which extends inward in a radial direction from the inner end of the inner-peripheral-side cylindrical portion 139. The cylindrical portions 137 and 139 and the flange portions 138 and 140 are integrally formed with one another by performing a pressing process (deep drawing process) on a metal plate.

The outer-peripheral-side cylindrical portion 137 of the metal core 132 forms a fitting portion which is fitted to the inner peripheral surface of the inner end of the outer ring 113. The inner flange portion 140 forms a seal attaching portion which is used to attach the elastic seal 135 thereto so as to sealing a gap between the rotary seal member 131 and the inner flange portion.
The resin member 133 is formed in an annular shape and is integrally formed with the inner end of the outer-peripheral-side cylindrical portion 137 of the metal core 132 by an insert molding. In addition, the resin member 133 is filled in a space S surrounded by the outer-peripheral-side cylindrical portion 137 of the metal core 132, the outer flange portion 138, and the inner-peripheral-side cylindrical portion 139.

As shown in Fig. 7, the upper portion of the resin member 133 is provided with a protrusion portion 141 which protrudes inward and outward in a radial direction. The upper end of the protrusion portion 141 is integrally formed with a connector portion 142 which is used to attach a harness thereto, the harness being used to connect signal processing means provided on the vehicle body to the magnetic sensor 134. The connector portion 142 is provided with a signal connector pin 143, and the magnetic sensor 134 is connected to the connector pin 143 via a lead wire 144 or the like. The magnetic sensor 134, the connector portion 142, the connector pin 143, the lead wire 144, the signal processing means, and the like constitute the sensor device 112. In addition, the sensor device 112 corresponds to an ABS sensor which is assembled in the hub unit 111.

As shown in Fig. 9, the magnetic sensor 134 is disposed in the resin member 133 in the space S to thereby form the sensor part. In addition, a sensing surface 134a of the magnetic sensor 134 faces an inner radial direction.
As shown in Fig. 9, the rotary seal member 131 includes a slinger 146 fixed to the inner ring 114 and a pulser 147 fixed to the outer peripheral surface of the slinger 146.

The slinger 146 is formed to have a substantially L-shaped section provided with a cylindrical portion 148 which extends in an axial direction and a flange portion 149 which extends outward in a radial direction from the inner end of the cylindrical portion 148. The outer side of the cylindrical portion 148 is fitted to the inner outer peripheral surface of the cylindrical wheel 123 of the inner ring 114. The inner side of the cylindrical portion 148 protrudes toward the inner side in an axial direction more than the cylindrical wheel 123.

The pulser 147 is formed by the N and S poles alternately arranged so as to output a rotation signal, and includes a support member 150 and a magnetic encoder 151. The support member 150 is formed of magnetic metal such as SUS430 so as to have an annular shape. In addition, the support member 150 is formed to have a substantially U-shaped section, where the magnetic encoder 151 is adhered to the outer peripheral surface and the magnetic encoder 151 is caulked to both axial sides of the outer peripheral surface in an inner peripheral direction so as not to be separated therefrom. The inner peripheral surface of the support member 150 is fitted to the outer peripheral surface of the cylindrical portion 148 of the slinger 146. The magnetic encoder 151 is formed by magnetic powders using rubber as a binder, and is opposed to the sensing surface 134a of the magnetic sensor 134 embedded in the resin member 133.

The inner outer peripheral surface of the cylindrical portion 148 of the slinger 146 and the outer side surface of the flange portion 149 are formed as a seal receiving surface which comes into contact with the elastic seal 135 of the fixed seal member 130. The elastic seal 135 includes lip portions 135a and 135b which come into contact with the outer peripheral surface of the cylindrical portion 148 and a lip portion 135c which comes into contact with the outer side surface of the flange portion 149, and prevents water or the like (depicted by the arrow a) from entering the bearing 110 via a gap between the inner peripheral surface of the resin member 133 and the radial outer end of the slinger 146.

The radial outer portion of the pulser 147 is covered by the inner-peripheral-side cylindrical portion 139 of the metal core 132 and the inner portion (axial outer portion) thereof is covered by the elastic seal 135 and the inner flange portion 140 of the metal core 132. Accordingly, the pulser is perfectly protected from the entry of water or the like depicted by the arrow a.

The inner-peripheral-side cylindrical portion 139, the outer flange portion 138, and the outer-peripheral-side cylindrical portion 137 of the metal core 132 are adhered to the resin member 133. For this reason, it is possible to allow the metal core 132 to be strongly adhered to the resin member 133 by ensuring a large adhering area.

The inner-peripheral-side cylindrical portion 139 of the metal core 132 is interposed between the magnetic sensor 134 and the magnetic encoder 151 of the pulser 147. For this reason, when the metal core 132 is magnetized, the metal core may have a bad influence on the magnetic sensor 134 which detects the magnetic encoder 151. Accordingly, in this embodiment, a nonmagnetic material is used to form the metal core 132.

In addition, as described above, the metal core 132 is bent at plural positions so as to form the outer-peripheral-side cylindrical portion 137, the outer flange portion 138, the inner-peripheral-side cylindrical portion 139, and the inner flange portion 140, and is formed by a deep drawing process. As metal, there is known nonmagnetic material which is hardened by a plastic working process and is also magnetized. For example, when SUS304 as austenitic stainless steel is subjected to a cold working process such as a deep drawing process, the structure thereof undergoes the martensitic transformation to thereby increase the rigidity and the magnetism.

For this reason, in this embodiment, instead of the configuration where the metal core 132 is only formed of nonmagnetic material, the metal core is formed of a nonmagnetic material which is resistant against magnetization by a plastic working process. In detail, SUS304L or SUS305 as austenitic stainless steel is used. Accordingly, like this embodiment, even when the metal core 132 is subjected to a complex bending process so as to be interposed between the magnetic sensor 134 and the pulser 147 (particularly, the magnetic encoder 151), the detection precision of the magnetic sensor 134 is not influenced. In addition, SUS304L has the smaller carbon content and larger nickel content than those of SUS304.

The present invention is not limited to the above-described embodiments, but may be appropriately modified into various forms. For example, the material of the metal core 132 is not limited to that of the above-described embodiments, and a material which is resistant against magnetization by a plastic working process may be adopted. In addition, an example of the plastic working process includes a deep drawing process, a bending process, and the like which are classified as a pressing process. A material of the metal core 132 may be selected by a processing condition such as a processing method or a temperature. In addition to the metal core 132, the support member 150 and the slinger 146 may be formed of a nonmagnetic material. In addition, the support member 150 for supporting the magnetic encoder 151 may be omitted, and the thickness of the magnetic encoder 151 may be enlarged to have the same outer diameter as that of the case where the support member 150 is used.
Further, the magnetic encoder 151 formed by the magnetized magnetic powders using rubber as a binder may be formed by the plastic magnet in the same manner as the first and second embodiments, the plastic magnet being formed by binding magnetic powders such as ferrite powders using a polyphenylene sulfide resin or a polyamide resin.

## Claims

1. A rolling-bearing sensor attaching sealing device comprising:
an annular slinger fixed to a rotary ring;
a magnetic encoder fixed to the slinger so as to be integrally rotatable; and
a sensor part including a metal core fixed to a fixed ring and provided with a seal member slidably contacting with the slinger and a magnetic sensor which detects a relative rotation between the fixed ring and the rotary ring by a variation of a magnetic pole using the magnetic encoder,
wherein the magnetic encoder is formed by a plastic magnet which contains magnetic powders oriented with a magnetic field in a predetermined direction.

2. The sensor attaching sealing device according to Claim 1, wherein the magnetic encoder is fixed to the slinger with a bumper member formed of an elastic material interposed therebetween.

3. The sensor attaching sealing device according to Claim 1, wherein the slinger is provided with a stepped portion which regulates a relative movement of the magnetic encoder in an axial direction and a radial direction.

4. The sensor attaching sealing device according to Claim 3, wherein the slinger is provided with an annular support member fixed to a peripheral surface thereof so as to support the magnetic encoder, and the support member is provided with the stepped portion.

5. A vehicle rolling bearing comprising:
a fixed ring fixed to a vehicle body; and
a sensor attaching sealing device including a rotary ring to which a vehicle wheel is fixed, a plurality of rolling elements which is interposed between the fixed ring and the rotary ring, and a sensor which shields a gap between the fixed ring and the rotary ring and detects a relative rotation between the fixed ring and the rotary ring,
wherein the sensor attaching sealing device is the sensor attaching sealing device according to Claim 1.

6. A rolling-bearing sensor attaching sealing device comprising:
an annular slinger fixed to a rotary ring;
a magnetic encoder fixed to the slinger so as to be integrally rotatable; and
a sensor part including a metal core fixed to a fixed ring and provided with a seal member slidably contacting with the slinger and a magnetic sensor which detects a relative rotation between the fixed ring and the rotary ring by a variation of a magnetic pole using the magnetic encoder,
wherein the metal core is formed by a plastic working process and at least a part thereof is interposed between the magnetic sensor and the magnetic encoder, and
wherein the metal core is formed of a nonmagnetic material which is resistant against magnetization by the plastic working process.

7. The sensor attaching sealing device according to Claim 6, wherein the nonmagnetic material forming the metal core is SUS304L or SUS305.

8. A vehicle rolling bearing comprising:
a fixed ring fixed to a vehicle body; and
a sensor attaching sealing device including a rotary ring to which a vehicle wheel is fixed, a plurality of rolling elements which is interposed between the fixed ring and the rotary ring, and a sensor which shields a gap between the fixed ring and the rotary ring and detects a relative rotation between the fixed ring and the rotary ring,
wherein the sensor attaching sealing device is the sensor attaching sealing device according to Claim 6.

9. The vehicle rolling bearing according to Claim 8, wherein the metal core includes an outer-peripheral-side cylindrical portion which is fitted and fixed to the fixed ring; a first flange portion which extends inward in a radial direction from an axial inner end of the outer-peripheral-side cylindrical portion; an inner-peripheral-side cylindrical portion which extends outward in an axial direction from a radial inner end of the first flange portion so as to pass through a gap between the magnetic sensor and the magnetic encoder; and a second flange portion which extends toward a rotary bearing ring from an axial outer end portion of the inner-peripheral-side cylindrical portion, and
wherein the second flange portion is provided with a seal member which seals a gap between the second flange portion and the rotary ring.
